# EUROPEAN PATENT SPECIFICATION

(11) **EP 4 424 853 B1**
(45) Date of publication and mention of the grant of the patent: **15.10.2025**
(21) Application number: 22797098.5
(22) Date of filing: 31.08.2022
(51) Int. Cl.: C22B 7/00, C22B 7/04, C22B 21/00

(54) **ALUMINIUM DROSS COOLING AND SEPARATION EQUIPMENT AND PROCESS**
VORRICHTUNG UND VERFAHREN ZUM KÜHLEN UND TRENNEN VON ALUMINIUMKRÄTZE
DISPOSITIF ET PROCÉDÉ DE REFROIDISSEMENT ET DE SÉPARATION DE SCORIES D'ALUMINIUM

(30) Priority: 29.10.2021 ES 202131020
(43) Date of publication of application: 04.09.2024
(73) Proprietor: ALUMINIUM DROSS METAL RECOVERY OPERATION, S.L., 28039 Madrid (ES)
(72) Inventor: DÍAZ QUIROGA, Juan Carlos, 28023 Madrid (ES)
(74) Representative: Pons IP
(86) International application number: PCT/ES2022/070548
(87) International publication number: WO 2023/073257

(56) References cited:
- WO-A1-2016/116884
- US-A- 4 637 591

## Description

### OBJECT OF THE INVENTION

The subject matter of the present invention relates to the technical field of mechanical engineering, specifically to the metallurgy sector.

The present invention refers to an equipment and method using said equipment for the cooling and separation of aluminium slag for its subsequent packaging and stowage, with its corresponding use as raw material, all of this in an automatic manner according to temperature and time parameters.

### BACKGROUND TO THE INVENTION

Aluminium is a non-ferromagnetic metal and is the third most common element found in the earth's crust.

It is extracted solely from the mineral known as bauxite, by transformation first into alumina by the Bayer process and then into aluminium metal by electrolysis.

It has a combination of properties that make it very useful in materials engineering, such as its low density and high resistance to corrosion; and by means of suitable alloys with other metals, its mechanical strength can be significantly increased, making it the most widely used metal in mechanical engineering after steel.

The industrial use of aluminium has made it one of the most important metals, both in terms of quantity and variety of uses, and today it is a multi-purpose material used in a wide range of economic fields.

Alloyed with other metals, it is used to create load-bearing structures in architecture and to manufacture industrial parts for all types of vehicles and boilermaking. It is also used in household items such as kitchen utensils and tool

In aluminium production processes, furnaces are used in which aluminium is used at high temperatures in molten form for casting parts or in alloys with other metals. During this aluminium smelting process, slag is generated which has a metallic content that is difficult to use.

Slag from the foaming/slagging of melting furnaces reacts exothermically, emitting incandescent particles and fumes into the atmosphere when it is removed from the furnace chamber at high temperatures (650°C-950°C).

The slag contains a mixture of liquid metal (5%-50%) and metal oxides (95%-50%) which, in contact with air, generates an oxidative reaction on the aluminium, losing its metallic characteristic and therefore its value.

If the extraction temperature of the slag is very high, the aluminothermic reaction can feed back as the oxidative process is exothermic, losing the metallic content of the slag if the cooling process is not stabilised.

To avoid this oxidative reaction, the temperature must drop below 400°C as quickly as possible, because during this cooling time, oxides adhere to the metal fraction and continue to increase until sufficient temperature is lost to neutralise the aluminothermic reaction.

The technique currently commonly used in foundries is to simply deposit the slag extracted from the furnaces in containers and wait for it to cool down. If the process is carried out in an uncontrolled manner, the slag can catch fire, leading to the reaction.

When the slag has lost sufficient temperature to be handled, it is transferred to a slag heap or container for later transfer to a waste manager. In the cooling process, as they have a significant metal fraction, they may have become blocks of irregular composition and format, making them difficult to handle and stow.

The problem that has arisen is that there is no functional and standardised application to improve the process, with irregular results.

DE2713281 describes an aluminium cooling equipment, however, it does not separate the metal fractions from the oxide and nitride fractions in the slag generated, nor does it guarantee a sufficient residence time for the metal to be removed as a solid, and there may be hazardous liquid aluminium spills.

Document ES2010575 proposes a method for improving slag cooling installations, however, it does not eliminate the transfer in containers of the slag from the melting furnaces to the equipment, so that the slag during this time enters into an aluminothermic state and oxidises the metal, although it also solidifies the metal part at the bottom of the proposed container, turning into blocks that hit the equipment when it is turned over. The cooling system in turn is by water mist, giving rise to the problem of generating corrosive atmospheres and possible ammonia and chloride reactions when in contact with the installation environment.

On the other hand, document ES2060480 presents a hot slag cooling process and a cooler using this process, but it does not solve the problem arising from the intermediate transfer of the slag from the furnaces, as this transfer is carried out by means of transfer boxes, without solving the danger of solidification and aluminothermic processes of the slag during the operation. It is also only applicable to large slag production.

Document EP1640464 describes a procedure and installation for cooling aluminium slag, although it still does not eliminate the transfer of the slag into containers, with the slag entering aluminothermia and oxidising the metal, although the metal part solidifies at the bottom of the container and turns into blocks.

The system proposed in the patent does not have forced cooling, so lowering the temperature below 400°C to avoid aluminothermia when it has already arisen is only achieved with oxygen insulation, and the system is not watertight so it does not avoid it. It is also a slow system and does not allow continuous use, waiting for cooling cycles and considerably increasing production time.

Document JP2001020020A describes a rotary system with a double refrigerated chamber for slag cooling. The system does not solve or describe the conditionality of the height of slag evacuation from the furnace, which conditions the construction and design of furnaces to provide the necessary height to incorporate an immediate cooling process at the exit of the furnaces. The system described incorporates a coolant supply system that does not guarantee sufficient heat exchange to stabilise the slag in a short time, so it resorts to injecting argon into the atmosphere of the chamber in order to avoid aluminothermia. The system includes hatches and flaps which, with semi-molten materials (liquid aluminium inside the slag coming from the furnaces) are technically unfeasible.

Document US3534910 mentions conveying and crushing by means of a vibrating system with a refrigerated chamber. The system proposes mechanical cams for the crushing of the slag and does not solve the plastic behaviour of the molten metal of the slag that ends up clogging the cams. The system is portable to avoid occupying the slag outlet of the furnaces but does not resolve the operation of the foundries, conditioning the cooling water and energy connections with hoses or flexible connections, which in foundries is technically unfeasible in the vicinity of the furnace openings, and interfering with the slagging processes by conditioning access in the de-slagging operations.

Document US2016/01457716 does not incorporate any mechanical treatment of the slag, so the efficiency of the system is low and it only tries to cool the slag by avoiding contact with oxidative atmosphere by incorporating inert gas at different stages of the process. Although it can be adapted to the mouth of the furnace, it conditions the construction design and occupies the slagging operation area. Further patent documents WO 2016/116884 A1 and US 4 637 591 A disclose alternative aluminium dross cooling and separation processes.

In all these systems, gas purification filters are incorporated by means of forced aspiration. The metal content of the gaseous effluents from the slag cooling and grinding process can be high (up to 30%) and their recovery is not described in any of them.

### DESCRIPTION OF THE INVENTION

The equipment object of the invention and the method used for the cooling and separation of aluminium slag is intended to solve the problems raised, by means of a continuous cooling of the slag collected from the furnaces until it is ground to separate the metallic portion from the oxide portion, favouring the decrease of the temperature below 400°C as soon as possible in order to avoid the aluminothermic process or fire of said slag, and without interfering in the constructive design of the furnaces (height and accesses) to operate during the de-slagging process.

The slag cooling and separation equipment and the Aluminium slag cooling and separation process of the present invention is disclosed in appended claims 1-12.

The invention does not interfere in the design of the furnaces where it is installed, nor the conditionality that these systems may represent when they are coupled to the mouths of the furnaces during the slag extraction process. Specifically, the equipment of the invention is positioned at approximately 90° with respect to the slag outlet, thus avoiding interfering with the de-slagging operations.

Next, the invention further comprises a vibrating elevator connected to the vibrating duct, with a channel with a lower inlet and an upper outlet, receiving the slag from the vibrating duct through the lower inlet and transferring it vertically to its upper outlet, from where a ramp can start that allows access to a cooling trommel. The vibrating elevator can also incorporate another cooling chamber that allows the slag to cool while ascending and continuously if it has not cooled below 400°C in the vibrating duct, a temperature above which the slag is not in danger of entering the aluminothermic phase. Thanks to the incorporation of the vibrating elevator, the equipment can be installed at any height and in any type of furnace, as the trommel is fed by this elevator, with only the height of the connections to it being scaled.

The cooling trommel receives the slag in a guided manner by means of an access duct located between this access mouth and the upper exit of the vibrating elevator or extended from the exit ramp. The access duct divides the access mouth into an inlet section where the slag is introduced and an outlet section, where the slag is evacuated by overflow from the trommel when it accumulates until it reaches the level of the outlet section and is collected in drawers for its subsequent categorisation.

The cooling trommel is arranged on a bed and has a body that can rotate on its axis, and this rotation can be facilitated by the incorporation of rollers on the bed, with the rollers being either drive rollers or rotation transmission rollers derived from one or more gearboxes.

In turn, it comprises an internal space limited by an internal wall, this internal wall having a preferably polygonal configuration, favouring autogenous grinding and the separation of the aluminium slag into metallic fractions and oxide fractions due to the irregular impact of the same during rotation. The inner wall is surrounded by a cooling chamber which incorporates the cooling trommel, with tubes through which the cooling liquid circulates.

The tubes are coupled to a distributor plate, which can rotate in conjunction with the rotation of the cooling trommel, the distributor plate being fitted into the cooling chamber of the trommel body. The distributor plate is a circular or essentially circular body with an internal chamber, where the tubes that extend longitudinally along the cooling chamber of the trommel body are received, communicating with the cooling chamber and with the internal chamber of the distributor plate.

The rotary joint is an element that is equipped with two internal pipes, an impulsion pipe and a return pipe. The rotary joint collects coolant from a hydraulic pump that is connected to a liquid tank, which is connected to the rotary joint by means of hydraulic connection elements, specifically to the supply line.

This liquid is directed to the internal chamber of the distributor plate and, consequently, to the cooling pipes, which distribute the liquid through the trommel cooling chamber until it is full filled, thus increasing the heat exchange between the aluminium slag located in the trommel and the cooling chamber.

At the same time as this liquid distribution is carried out, in order to favour the aluminium slag cooling process, the distributor plate rotates around its own axis in a way that is in solidarity with the trommel body, achieving a forced and homogeneous distribution along the cooling chamber, so that the aluminium slag housed in the trommel is cooled at the same time as it is ground, making it possible and favouring the separation for the use of the metallic fraction.

Once the coolant has been distributed at a higher temperature and has absorbed the heat of the aluminium slag, it is collected by the rotary joint again, through the return line, which communicates directly with the cooling chamber of the trommel, the distribution of the fluid being bidirectional, continuously initiating a cyclical process of slag cooling.

The distribution system (gasket, distributor plate, ducts) is pressurised and the pressure and flow of the coolant is regulated by means of the regulation ramp outside the equipment. The water inlet is connected directly to the pressurised water network of the foundry, and the flow rate is regulated by means of a valve at the outlet of the circuit.

During the transport between the different elements and their deposit on the cooling trommel, a suction unit intervenes, equipped with suction ducts, a motor connected to these ducts and one or more separator filters to catalogue the fraction of oxide sucked in, with these suction ducts being fed into the upper outlet of the vibrating elevator and/or into the access mouth of the cooling trommel.

Likewise, the subject invention is associated with a slag extraction and separation process in which the following stages are distinguished: depositing the aluminium dross in the extraction tray, transferring the aluminium dross to the vibrating duct, transferring the aluminium dross through the vibrating duct to the vibrating elevator, and from there, to the cooling trommel. These stages can be carried out with continuous cooling by incorporating the cooling chambers in both the chute and the vibrating conveyor.

The filtering system, by releasing the solid particles captured by the suction, is collected in the lower hopper by blowing sleeves, and these are channelled through a duct that can be discharged in the same outlet of the slag coming from the grinding trommel through the ramp box or be conducted through another outlet by changing the pant flap. This is done to take advantage of the recovery of this filtered powder, which contains between 15 and 30% aluminium and which, depending on its content, can be recovered together with the treated slag or separated into another container to be treated separately.

Once the dross reaches the cooling trommel, it is ground and separated into metallic and oxide portions by means of the impact of the dross against the polygonally arranged walls and continuous cooling thanks to the cooling chamber. The metallic portion is deposited by overflowing in drawers for its treatment and reuse or use as raw material, and the oxide portion is sucked out to be treated separately.

This process described allows the obtaining of metal fractions from the aluminium slag for its subsequent use as raw material, reducing the waste generated in conventional processes, where the total amount of slag generated is classified as waste, wasting its metal content for recycling or future use in metallurgical processes.

### DESCRIPTION OF THE DRAWINGS

In order to complement the description that is being made and with the aim of helping to a better understanding of the characteristics of the invention, in accordance with a preferred example of practical realisation of the same, a set of drawings is attached as an integral part of the said description, in which the following has been represented for illustrative and non-limiting purposes:
Figure 1.- Shows a perspective view of the slag extraction and cooling equipment.
Figure 2.- Shows a front view of the slag extraction and cooling equipment.
Figure 3.- Shows a perspective view of the front area of the sectioned cooling trommel.
Figure 4.- Shows a sectional side view of the cooling trommel

### PREFERRED EMBODIMENT OF THE INVENTION

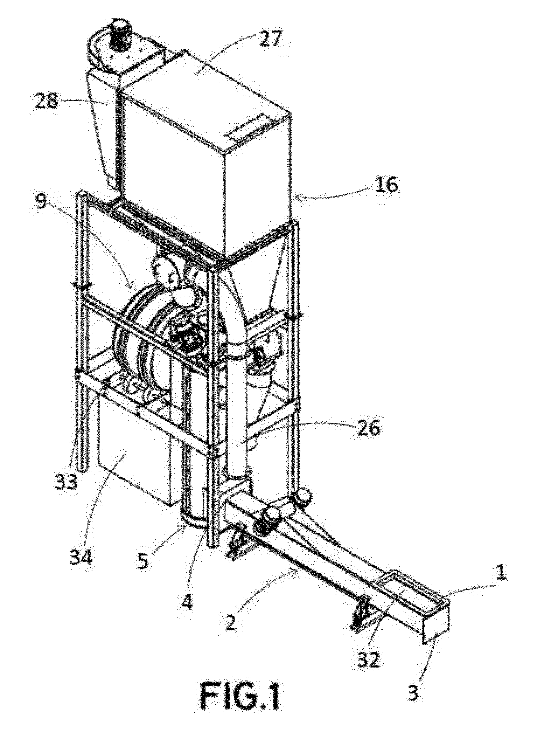

In the following, with the aid of Figures 1 to 4, a preferred embodiment of the aluminium dross extraction and cooling equipment is described.

Figures 1 shows a perspective view of the slag extraction and cooling equipment comprising an aluminium slag extraction tray (1) intended to be positioned under the slag extraction door of a melting furnace, presenting an opening (32) allowing the passage of slag up to a certain size, limited by the vibrating duct section, a vibrating duct (2) having a first end (3) and a second end (4) which is embedded underneath the extraction tray (1) in an area close to the first end (3) and which conveys the aluminium slag from the first end (3) to the second end (4).

Furthermore, the invention further comprises a vibrating elevator (5) which is linked to the vibrating duct (2). Said vibrating elevator (5) additionally comprises a central body (6) with a channel (7) arranged upwards and helically around the longitudinal axis of said central body (6) with a lower inlet (8), which receives the second end (4) of the vibrating duct (2), and an upper outlet (31), from which an outlet ramp (10) can start.

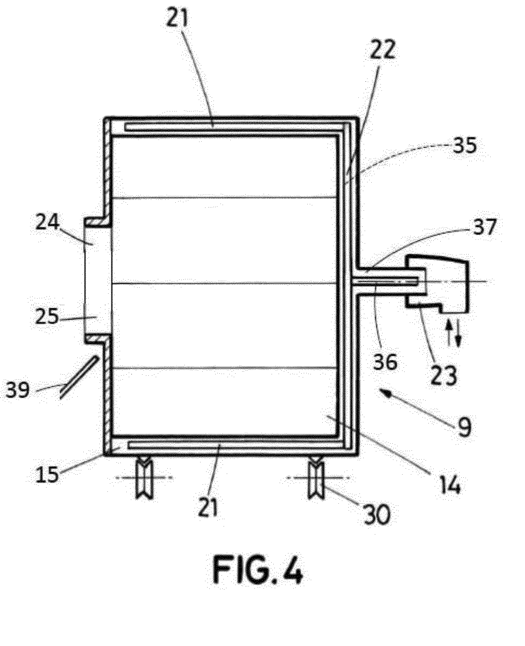

In addition, the aluminium dross extraction and suction equipment has a cooling trommel (9), shown in figure 4, which can rotate on a bed (33) and which receives the dross transported by the vibrating elevator (5) through the exit ramp (10). The cooling trommel (9) comprises a front zone (19) and a rear zone (20), having an access mouth (11) where the exit ramp (10) ends.

On the other hand, the invention further comprises a filtering unit (16) that sucks the oxide portions of the slag from the upper outlet (31) and/or from the access port (11), said filtering unit (16) being provided with suction ducts (26) that connect with the upper outlet (31) of the vibrating elevator (5) and/or with the access port (11) of the cooling trommel (9), a suction motor (27) connected to the suction ducts (26), and at least one separating filter (28) linked to the suction motor (27), for subsequent sorting of these oxide portions.

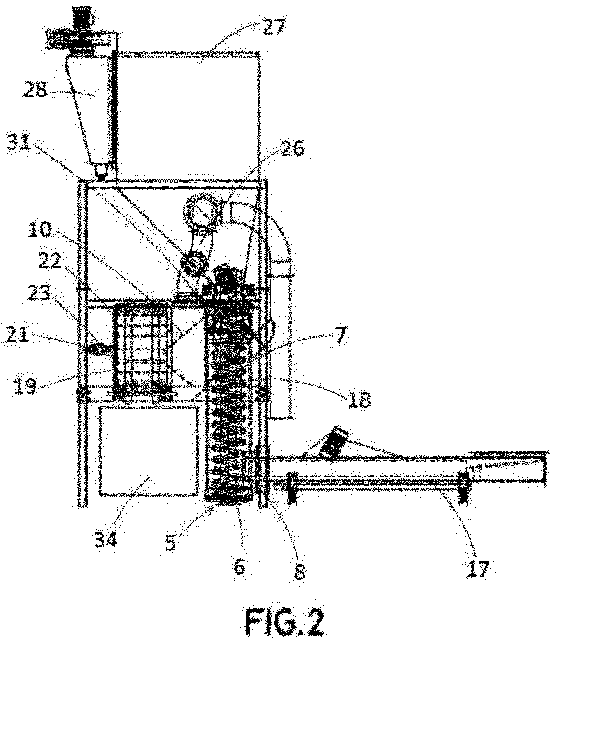

Figure 2 shows a front view of the dross extraction and cooling equipment showing how the vibrating duct (2) and the vibrating elevator (5) may additionally include a vibrating duct cooling chamber (17) and a vibrating elevator cooling chamber (18), which cool the aluminium dross that is transported by these elements from the extraction tray (1) through the vibrating chute (2) to its second end (4), which in turn is received by the bottom inlet (8) of the chute (7) of the vibrating elevator (5).

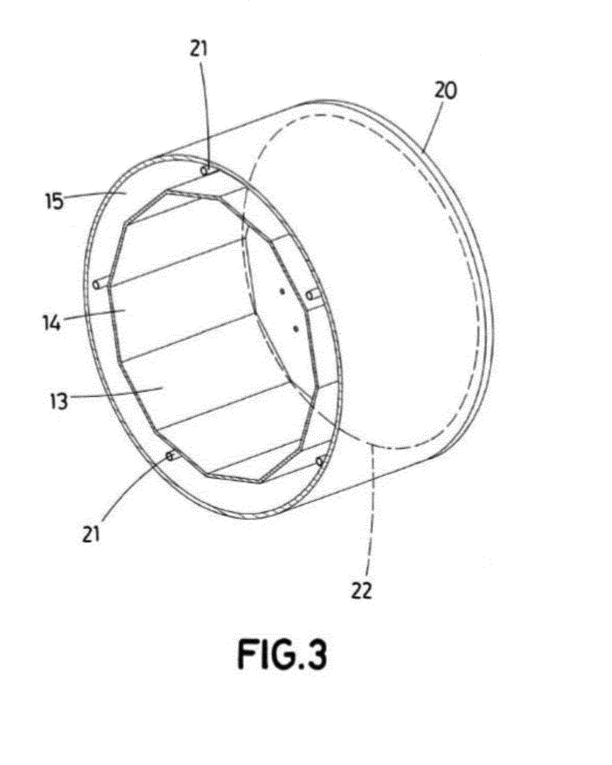

Figure 3 shows a sectional perspective view of the front area (19) of the cooling trommel (9). It can be seen that the cooling trommel (9) comprises an internal space (13) limited by an internal wall (14), which has a preferably polygonal configuration in order to facilitate the grinding of the aluminium slag located in the internal space (13) by the irregular collision with said internal wall (14).

Likewise, the cooling trommel (9) includes a trommel cooling chamber (15), surrounding the internal wall (14), which cools the aluminium dross while it is being milled in order to separate the usable metal portion from the dross and from the oxide portion that will be collected by the suction equipment (16).

Figure 4 shows a sectional view of the cooling trommel (9), where in the cooling chamber of the trommel (15) there are cooling tubes (21) designed to conduct a cooling liquid inside the said cooling chamber (15) to reduce the temperature of the slag, a distributor plate (22) located inside the first cooling chamber (15) and where the cooling tubes (21) are coupled, with a rotary movement in conjunction with the rotary movement of the body of the cooling trommel (9), configured to position the cooling tubes (21) so that the cooling liquid is distributed homogeneously through the first cooling chamber (15) from the front zone (19) to the rear zone (20).

The manifold plate (22) comprises an internal chamber (35) that receives the coolant from the rotating union (23) and communicates with the cooling pipes (21), configured to direct the coolant towards the cooling pipes (21).

The cooling trommel (9) also incorporates a rotating union (23) arranged in the rear area (20) and connected to the distributor plate (22), designed to direct the coolant at a lower temperature towards the cooling tubes (21) and to collect the coolant at a higher temperature coming from the first cooling chamber (15) through the rear area (20). Said rotary joint (23) comprises a flow line (36) that connects with the internal chamber (35) of the manifold plate, capable of directing cooling liquid coming from a liquid tank towards said internal chamber (35); and a return line (37) that communicates with the trommel cooling chamber (15) and that receives the higher temperature liquid that circulates through said trommel cooling chamber (15).

It is then observed in more detail the arrangement of rollers (30) that enable the cooling trommel (9) to rotate on its own axis, as well as a division of the access port (11) through the access duct (12) into an upper access (24) through which the aluminium dross from the vibrating elevator (5) enters and a lower access (25) through which the metallic portion obtained after the grinding and cooling of said dross escapes by overflowing.

It should be noted that the equipment of the invention is associated with a process for the extraction of aluminium slag and its cooling in order to make use of the metallic portion and separate the oxide portion thereof. This process comprises the following steps:
- depositing the aluminium dross in the extraction tray (1),
- transferring the aluminium dross to the vibrating chute (2),
- transferring the aluminium dross through the vibrating chute (2) to the vibrating elevator (5),
- convey the aluminium dross through the vibrating conveyor (5) to the cooling trommel (9),
- cooling and milling the aluminium dross in the internal space (13) of the cooling trommel (9), the aluminium dross being separated into a metallic portion and an oxide portion by collision with the internal wall (14) of the cooling trommel (9), and
- collecting the metallic portion of the aluminium dross which is expelled from the internal space (13) by overflowing through the lower access (25) of the access port (11) of the cooling trommel (9) into drawers (34).

It is possible to carry out the steps of sucking the oxide portion of the aluminium dross by means of the filtering equipment (16) or to transfer the aluminium dross through the vibrating duct (2) and the vibrating elevator (5) in a refrigerated way thanks to the presence of the second and third cooling chambers (17, 18) incorporated respectively in the vibrating duct (2) and in the vibrating elevator (5).

## Claims

1. Aluminium slag cooling and separation equipment comprising:
- an aluminium slag extraction tray (1) intended to be positioned at approximately 90° under the slag extraction door of a melting furnace, in which the aluminium slag is deposited,
- a vibrating duct (2) to which the aluminium slag is transferred, having a first end (3) and a second end (4), placed under the extraction tray (1) in an area close to the first end (3),
- a vibrating elevator (5) which receives the aluminium slag,
- a cooling trommel (9) downstream of the vibrating elevator (5), that receives the aluminium slag from it, which is rotatably arranged on a bedplate (33), and comprising:
• a front zone (19),
• a rear area (20),
• an access port (11) in the front area (19) that receives the exit ramp (10) of the vibrating elevator (5),
• an internal wall (14) which limits an internal space (13),
• a trommel cooling chamber (15) enclosing the inner wall (14),
• cooling pipes (21) located in the trommel cooling chamber (15) and intended to convey a cooling liquid through the inside of the trommel cooling chamber (15) to the front zone (19),
• a manifold plate (22) located inside the trommel cooling chamber (15) to which the cooling pipes (21) are attached, with a rotary movement in conjunction with the rotary movement of the cooling trommel body (9), intended to position the cooling pipes (21) so that the cooling liquid is evenly distributed in the first cooling chamber (13), and
• a rotary joint (23) arranged in the rear zone (20) and connected to the distributor plate (22), intended to direct the coolant at lower temperature towards the cooling tubes (21) and to collect the coolant at higher temperature coming from the trommel cooling chamber (15) through the rear zone (20) of the cooling trommel (9).
**characterized in that**:
the vibrating elevator (5) is linked to the vibrating duct (2) and comprising a central body (6) with a helical ascending channel (7) around its longitudinal axis with a lower inlet (8) and an upper outlet (31); and an outlet ramp (10) starting and extending from the upper outlet (31),
the access port (11) is divided through the access duct (12) into an upper access (24) through which the aluminium dross from the vibrating elevator (5) enters and a lower access (25) through which the metallic portion obtained after the grinding and cooling of said dross escapes by overflowing,
the rotary joint (23) comprises an impulsion conduction (36) that connects with the internal chamber (35) of the distributor plate, with capacity to direct cooling liquid coming from a liquid tank towards said internal chamber (35); and a return conduction (37) that communicates with the trommel cooling chamber (15) and that receives the liquid at a higher temperature that circulates through said trommel cooling chamber (15),
the distributor plate (22) is a circular or essentially circular body with an internal chamber (35), where the cooling pipes (21) that extend longitudinally along the cooling chamber (15) of the trommel body are received, communicating the cooling chamber (21) with the internal chamber (35) of the distributor plate (22),
and **in that** the equipment additionally comprises:
a filtering equipment (16) which is linked to the upper outlet (31) of the vibrating elevator (5) and/or to the access port (11) of the cooling trommel (9), said filtering equipment (16) comprising:
- suction ducts (26) connecting with the upper outlet (31) of the vibrating elevator (5) and/or with the access port (11) of the cooling trommel (9),
- a collection hopper for the filtered particles discharging into the same outlet as the cooled slag (26)
- a suction motor (27) connected to the suction ducts (26), and
- at least one separating filter (28) linked to the suction motor (27).

2. Aluminium slag cooling and separation equipment according to claim 1, where the extraction tray (1) is provided with an opening (32) that allows the controlled passage of slag preventing the obstruction of the vibrating duct (2).

3. Aluminium slag cooling and separation equipment according to claim 1 wherein the vibrating duct (2) comprises a vibrating duct cooling chamber (17).

4. Aluminium slag cooling and separation equipment according to claim 1 or 3 wherein the vibrating elevator (5) incorporates a vibrating elevator cooling chamber (18).

5. Aluminium slag cooling and separation equipment according to claim 1 wherein the inner wall (14) of the inner space (13) has a polygonal configuration.

6. Aluminium slag cooling and separation equipment according to claim 1 wherein the access port (11) of the cooling trommel (9) is sectioned by the exit ramp (10) into an upper access (24) and a lower access (25).

7. Aluminium dross cooling and separation equipment according to claim 6 where the cooling trommel (9) incorporates an evacuation ramp (39) in the lower access (25) that allows the controlled circulation of the metallic part of the aluminium dross to some drawers (34) located below said lower access (25).

8. Aluminium dross cooling and separation equipment according to claim 1, wherein the distributor plate (22) comprises an internal chamber (35) that receives the cooling liquid coming from the rotary joint (23) and communicates with the cooling tubes (21), configured to direct the liquid towards said cooling tubes (21).

9. Aluminium slag cooling and separation process using the equipment described in any of claims 1-8, **characterised in that** it comprises the stages of:
- depositing the aluminium dross in the extraction tray (1),
- transferring the aluminium dross to the vibrating chute (2),
- transferring the aluminium dross through the vibrating chute (2) to the vibrating elevator (5),
- convey the aluminium dross through the vibrating conveyor (5) to the cooling trommel (9),
- cooling and grinding the aluminium dross in the internal space (13) of the cooling trommel (9) separating the aluminium dross into a metallic portion and an oxide portion by collision with the internal wall (14) of the cooling trommel (9), and
- collecting the metallic portion of the aluminium dross that is expelled from the internal space (13) by overflowing through the lower access (25) of the access port (11) of the cooling trommel (9) in drawers (34).

10. Aluminium dross cooling and separation process according to claim 9, which additionally includes the stage of aspirating the oxide portion of the aluminium dross by means of the filtering equipment (16).

11. Aluminium dross cooling and separation process according to claim 9 wherein the stage of transferring the aluminium dross through the vibrating duct (2) is carried out by cooling said aluminium dross by means of the use of the second cooling chamber (17).

12. Aluminium dross cooling and separation process according to claim 9 wherein the stage of transporting the aluminium dross through the vibrating elevator (5) is carried out by cooling said aluminium dross by means of the use of the third cooling chamber (18).

## Patentansprüche

1. Vorrichtung zum Kühlen und Trennen von Aluminiumschlacke, die Folgendes umfasst:
- eine Aluminiumschlacke-Auffangwanne (1), die dazu bestimmt ist, in einem Winkel von etwa 90° unterhalb der Schlackenaustragstür eines Schmelzofens positioniert zu werden, in der die Aluminiumschlacke abgelagert wird,
- einen Vibrationskanal (2), in den die Aluminiumschlacke überführt wird, mit einem ersten Ende (3) und einem zweiten Ende (4), der unter der Auffangwanne (1) in einem Bereich nahe dem ersten Ende (3) angeordnet ist,
- einen Vibrationsförderer (5), der die Aluminiumschlacke aufnimmt,
- eine Kühltrommel (9) stromabwärts des Vibrationsförderers (5), die die Aluminiumschlacke von diesem aufnimmt, die drehbar auf einer Grundplatte (33) angeordnet ist, und umfasst:
• eine vordere Zone (19),
• einen hinteren Bereich (20),
• eine Zugangsöffnung (11) im vorderen Bereich (19), die die Ausgangsrampe (10) des Vibrationsförderers (5) aufnimmt,
• eine Innenwand (14), die einen Innenraum (13) begrenzt,
• eine Trommelkühlkammer (15), die die Innenwand (14) umschließt,
• Kühlrohre (21), die sich in der Kühlkammer (15) der Trommel befinden und dazu bestimmt sind, eine Kühlflüssigkeit durch das Innere der Kühlkammer (15) der Trommel in den vorderen Bereich (19) zu leiten,
• eine Verteilerplatte (22), die sich im Inneren der Kühlkammer (15) der Trommel befindet, an der die Kühlrohre (21) befestigt sind, mit einer Drehbewegung in Verbindung mit der Drehbewegung des Kühltrommelkörpers (9), die dazu bestimmt ist, die Kühlrohre (21) so zu positionieren, dass die Kühlflüssigkeit gleichmäßig in der ersten Kühlkammer (13) verteilt wird, und
• eine in der hinteren Zone (20) angeordnete und mit der Verteilerplatte (22) verbundene Drehdurchführung (23), die dazu bestimmt ist, das Kühlmittel mit niedrigerer Temperatur zu den Kühlrohren (21) zu leiten und das Kühlmittel mit höherer Temperatur, das aus der Kühlkammer der Trommel (15) kommt, durch die hintere Zone (20) der Kühltrommel (9) zu sammeln.
**dadurch gekennzeichnet, dass**:
der Vibrationsförderer (5) mit dem Vibrationskanal (2) verbunden ist und einen zentralen Körper (6) mit einem schraubenförmig ansteigenden Kanal (7) um seine Längsachse mit einem unteren Einlass (8) und einem oberen Auslass (31); und eine Auslassrampe (10), die am oberen Auslass (31) beginnt und sich von dort aus erstreckt, umfasst,
die Zugangsöffnung (11) durch den Zugangskanal (12) in einen oberen Zugang (24), durch den die Aluminiumkrätze aus dem Vibrationsförderer (5) eintritt, und einen unteren Zugang (25), durch den der nach dem Zerkleinern und Abkühlen der Krätze erhaltene Metallanteil durch Überlaufen austritt, unterteilt ist,
die Drehdurchführung (23) eine Impulsleitung (36) umfasst, die mit der Innenkammer (35) der Verteilerplatte verbunden ist, mit der Fähigkeit, Kühlflüssigkeit, die von einem Flüssigkeitstank kommt, zu der Innenkammer (35) zu leiten; und eine Rücklaufleitung (37), die mit der Kühlkammer (15) der Trommel in Verbindung steht und die Flüssigkeit mit höherer Temperatur aufnimmt, die durch die Kühlkammer (15) der Trommel zirkuliert, wobei die Verteilerplatte (22) ein kreisförmiger oder im Wesentlichen kreisförmiger Körper mit einer Innenkammer (35) ist, in der die Kühlrohre (21) aufgenommen sind, die sich in Längsrichtung entlang der Kühlkammer (15) des Trommelkörpers erstrecken und die Kühlkammer (21) mit der Innenkammer (35) der Verteilerplatte (22) verbinden,
und dadurch, dass die Vorrichtung zusätzlich umfasst:
eine Filtereinrichtung (16), die mit dem oberen Auslass (31) des Vibrationsförderers (5) und/oder mit der Zugangsöffnung (11) der Kühltrommel (9) verbunden ist, wobei die Filtervorrichtung (16) umfasst:
- Ansaugkanäle (26), die mit dem oberen Auslass (31) des Vibrationsförderers (5) und/oder mit der Zugangsöffnung (11) der Kühltrommel (9) verbunden sind,
- einen Sammeltrichter für die gefilterten Partikel, der in denselben Auslass wie die gekühlte Schlacke (26) mündet
- einen Saugmotor (27), der mit den Saugkanälen (26) verbunden ist, und
- mindestens einen Abscheidefilter (28), der mit dem Saugmotor (27) verbunden ist.

2. Vorrichtung zum Kühlen und Trennen von Aluminiumschlacke nach Anspruch 1, wobei die Auffangwanne (1) mit einer Öffnung (32) versehen ist, die einen kontrollierten Durchgang der Schlacke ermöglicht und eine Verstopfung des Vibrationskanals (2) verhindert.

3. Vorrichtung zum Kühlen und Trennen von Aluminiumschlacke nach Anspruch 1, wobei der Vibrationskanal (2) eine Vibrationskanal-Kühlkammer (17) umfasst.

4. Vorrichtung zum Kühlen und Trennen von Aluminiumschlacke nach Anspruch 1 oder 3, wobei der Vibrationselevator (5) eine Vibrationsförderer-Kühlkammer (18) enthält.

5. Vorrichtung zum Kühlen und Trennen von Aluminiumschlacke nach Anspruch 1, wobei die Innenwand (14) des Innenraums (13) eine polygonale Form aufweist.

6. Vorrichtung zum Kühlen und Trennen von Aluminiumschlacke nach Anspruch 1, wobei die Zugangsöffnung (11) der Kühltrommel (9) durch die Austrittsrampe (10) in einen oberen Zugang (24) und einen unteren Zugang (25) unterteilt ist.

7. Vorrichtung zum Kühlen und Trennen von Aluminiumkrätze nach Anspruch 6, wobei die Kühltrommel (9) im unteren Zugang (25) eine Austragsrampe (39) aufweist, die die kontrollierte Zirkulation des metallischen Teils der Aluminiumkrätze zu einigen Schubladen (34) ermöglicht, die sich unterhalb des unteren Zugangs (25) befinden.

8. Vorrichtung zum Kühlen und Trennen von Aluminiumkrätze nach Anspruch 1, wobei die Verteilerplatte (22) eine Innenkammer (35) umfasst, die die von der Drehdurchführung (23) kommende Kühlflüssigkeit aufnimmt und mit den Kühlrohren (21) in Verbindung steht, die so konfiguriert sind, dass sie die Flüssigkeit zu den Kühlrohren (21) leiten.

9. Verfahren zum Kühlen und Trennen von Aluminiumschlacke unter Verwendung der in einem der Ansprüche 1-8 beschriebenen Vorrichtung, **dadurch gekennzeichnet, dass** es die folgenden Schritte umfasst:
- Ablagern der Aluminiumkrätze in der Auffangwanne (1),
- Überführen der Aluminiumkrätze an die Vibrationsrinne (2),
- Überführen der Aluminiumkrätze durch die Vibrationsrinne (2) an den Vibrationsförderer (5),
- Befördern der Aluminiumkrätze über den Vibrationsförderer (5) zur Kühltrommel (9),
- Kühlen und Mahlen der Aluminiumkrätze im Innenraum (13) der Kühltrommel (9), Trennen der Aluminiumkrätze in einen metallischen Anteil und einen Oxidanteil durch Aufprall auf die Innenwand (14) der Kühltrommel (9), und
- Sammeln des metallischen Anteils der Aluminiumkrätze, der aus dem Innenraum (13) durch Überlaufen durch den unteren Zugang (25) der Zugangsöffnung (11) der Kühltrommel (9) in Schubladen (34) ausgestoßen wird.

10. Verfahren zum Kühlen und Trennen von Aluminiumkrätze nach Anspruch 9, das zusätzlich die Stufe des Absaugens des Oxidanteils der Aluminiumkrätze mittels der Filtervorrichtung (16) umfasst.

11. Verfahren zum Kühlen und Trennen von Aluminiumkrätze nach Anspruch 9, wobei der Schritt des Überführens der Aluminiumkrätze durch den Vibrationskanal (2) durch Kühlen der Aluminiumkrätze unter Verwendung der zweiten Kühlkammer (17) durchgeführt wird.

12. Verfahren zum Kühlen und Trennen von Aluminiumkrätze nach Anspruch 9, wobei der Schritt des Überführens der Aluminiumkrätze durch den Vibrationsförderer (5) durch Kühlen der Aluminiumkrätze unter Verwendung der dritten Kühlkammer (18) durchgeführt wird.

## Revendications

1. Équipement de refroidissement et de séparation des scories d'aluminium comprenant :
- un plateau d'extraction des scories en aluminium (1) destiné à être positionné à environ 90° sous la porte d'extraction des scories d'un four de fusion, dans lequel les scories d'aluminium se déposent,
- un conduit vibrant (2) dans lequel les scories d'aluminium sont transférées, ayant une première extrémité (3) et une seconde extrémité (4), placée sous le plateau d'extraction (1) dans une zone proche de la première extrémité (3),
- un élévateur vibrant (5) qui reçoit les scories d'aluminium,
- un trommel de refroidissement (9) en aval de l'élévateur vibrant (5), qui reçoit les scories d'aluminium, qui est monté de manière rotative sur une plaque d'assise (33) et comprenant :
• une zone avant (19),
• une zone arrière (20),
• une ouverture d'accès (11) dans la zone avant (19) qui reçoit la rampe de sortie (10) de l'élévateur vibrant (5),
• une paroi interne (14) qui limite un espace interne (13),
• une chambre de refroidissement du trommel (15) entourant la paroi intérieure (14),
• des tuyaux de refroidissement (21) situés dans la chambre de refroidissement à tambour (15) et destinés à acheminer un liquide de refroidissement à travers l'intérieur de la chambre de refroidissement à tambour (15) vers la zone avant (19),
• une plaque collectrice (22) située à l'intérieur de la chambre de refroidissement du trommel (15) à laquelle les tuyaux de refroidissement (21) sont attachés, avec un mouvement rotatif en liaison avec le mouvement rotatif du corps du trommel de refroidissement (9), destiné à positionner les tuyaux de refroidissement (21) de manière à ce que le liquide de refroidissement soit uniformément réparti dans la première chambre de refroidissement (13), et
• un joint rotatif (23) disposé dans la zone arrière (20) et relié à la plaque de distribution (22), destiné à diriger le liquide de refroidissement à basse température vers les tubes de refroidissement (21) et à collecter le liquide de refroidissement à température plus élevée provenant de la chambre de refroidissement du trommel (15) à travers la zone arrière (20) du trommel de refroidissement (9).
**caractérisé en ce que** :
l'élévateur vibrant (5) est relié au conduit vibrant (2) et comprend un corps central (6) avec un canal ascendant hélicoïdal (7) autour de son axe longitudinal avec une entrée inférieure (8) et une sortie supérieure (31) ; et une rampe de sortie (10) commençant et s'étendant à partir de la sortie supérieure (31),
l'orifice d'accès (11) est divisé par le conduit d'accès (12) en un accès supérieur (24) par lequel pénètrent les crasses d'aluminium provenant de l'élévateur vibrant (5) et un accès inférieur (25) par lequel s'échappe par débordement la partie métallique obtenue après broyage et refroidissement desdites crasses,
le joint rotatif (23) comprend une conduite d'impulsion (36) qui est reliée à la chambre interne (35) de la plaque de distribution, capable de diriger le liquide de refroidissement provenant d'un réservoir de liquide vers ladite chambre interne (35) ; et une conduction de retour (37) qui communique avec la chambre de refroidissement du trommel (15) et qui reçoit le liquide à une température plus élevée qui circule dans ladite chambre de refroidissement du trommel (15), la plaque de distribution (22) est un corps circulaire ou essentiellement circulaire avec une chambre interne (35), où sont reçus les tuyaux de refroidissement (21) qui s'étendent longitudinalement le long de la chambre de refroidissement (15) du corps du trommel, faire communiquer la chambre de refroidissement (21) avec la chambre interne (35) de la plaque de distribution (22),
et **en ce que** l'équipement comprend en outre :
un équipement de filtrage (16) relié à la sortie supérieure (31) de l'élévateur vibrant (5) et/ou à l'orifice d'accès (11) du trommel de refroidissement (9), ledit équipement de filtrage (16) comprenant :
- des conduits d'aspiration (26) reliés à la sortie supérieure (31) de l'élévateur vibrant (5) et/ou à l'orifice d'accès (11) du trommel de refroidissement (9),
- une trémie de collecte des particules filtrées se déversant dans la même sortie que le laitier refroidi (26)
- un moteur d'aspiration (27) relié aux conduits d'aspiration (26), et
- au moins un filtre de séparation (28) relié au moteur d'aspiration (27).

2. Équipement de refroidissement et de séparation des scories d'aluminium selon la revendication 1, où le plateau d'extraction (1) est pourvu d'une ouverture (32) qui permet le passage contrôlé des scories en évitant l'obstruction du conduit vibrant (2).

3. Équipement de refroidissement et de séparation des scories d'aluminium selon la revendication 1, dans lequel le conduit vibrant (2) comprend une chambre de refroidissement du conduit vibrant (17).

4. Équipement de refroidissement et de séparation des scories d'aluminium selon la revendication 1 ou 3, dans lequel l'élévateur vibrant (5) comprend une chambre de refroidissement de l'élévateur vibrant (18).

5. Équipement de refroidissement et de séparation des scories d'aluminium selon la revendication 1, dans lequel la paroi intérieure (14) de l'espace intérieur (13) a une configuration polygonale.

6. Équipement de refroidissement et de séparation des scories d'aluminium selon la revendication 1, dans lequel l'orifice d'accès (11) du trommel de refroidissement (9) est divisé par la rampe de sortie (10) en un accès supérieur (24) et un accès inférieur (25).

7. Équipement de refroidissement et de séparation des crasses d'aluminium selon la revendication 6 où le trommel de refroidissement (9) incorpore une rampe d'évacuation (39) dans l'accès inférieur (25) qui permet la circulation contrôlée de la partie métallique des crasses d'aluminium vers des tiroirs (34) situés sous ledit accès inférieur (25).

8. Équipement de refroidissement et de séparation des crasses d'aluminium selon la revendication 1, dans lequel la plaque de distribution (22) comprend une chambre interne (35) qui reçoit le liquide de refroidissement provenant du joint rotatif (23) et communique avec les tubes de refroidissement (21), configurée pour diriger le liquide vers lesdits tubes de refroidissement (21).

9. Procédé de refroidissement et de séparation des scories d'aluminium utilisant l'équipement décrit dans l'une des revendications 1 à 8, se **caractérise par le fait qu'**il comprend les étapes suivantes :
- déposer les scories d'aluminium dans le bac d'extraction (1),
- transférer des scories d'aluminium vers la goulotte vibrante (2),
- transférer des scories d'aluminium à travers la goulotte vibrante (2) vers l'élévateur vibrant (5),
- transporter les scories d'aluminium à travers le convoyeur vibrant (5) jusqu'au trommel de refroidissement (9),
- refroidir et broyer les scories d'aluminium dans l'espace interne (13) du tambour de refroidissement (9) en séparant les scories d'aluminium en une partie métallique et une partie oxydée par collision avec la paroi interne (14) du tambour de refroidissement (9), et
- collecter la partie métallique des scories d'aluminium qui est expulsée de l'espace interne (13) par débordement à travers l'accès inférieur (25) de l'orifice d'accès (11) du tambour de refroidissement (9) dans des tiroirs (34).

10. Procédé de refroidissement et de séparation de l'écume d'aluminium selon la revendication 9, qui comprend en outre l'étape d'aspiration de la partie oxydée des scories d'aluminium au moyen de l'équipement de filtrage (16).

11. Procédé de refroidissement et de séparation des scories d'aluminium selon la revendication 9, dans lequel l'étape de transfert des scories d'aluminium à travers le conduit vibrant (2) est réalisée en refroidissant lesdites scories d'aluminium au moyen de l'utilisation de la seconde chambre de refroidissement (17).

12. Procédé de refroidissement et de séparation des scories d'aluminium selon la revendication 9, dans lequel l'étape de transport des scories d'aluminium à travers l'élévateur vibrant (5) est réalisée en refroidissant lesdites scories d'aluminium au moyen de l'utilisation de la troisième chambre de refroidissement (18).
